# EUROPÄISCHE PATENTSCHRIFT

(11) **EP 3 222 133 B1**
(45) Veröffentlichungstag und Bekanntmachung des Hinweises auf die Patenterteilung: **03.03.2021**
(21) Anmeldenummer: 16202682.7
(22) Anmeldetag: 07.12.2016
(51) Int. Cl.: A01D 41/127

(54) **VERFAHREN, VERWENDUNG UND MESSVORRICHTUNG ZUR ERFASSUNG EINER KORNZAHL EINES ERNTEGUTSTROMS**
METHOD, USE AND DEVICE FOR DETECTING A GRAIN COUNT OF A CROP MATERIAL FLOW
PROCÉDÉ, UTILISATION ET DISPOSITIF DE DÉTECTION DU NOMBRE DE GRAINS D'UN FLUX DE RÉCOLTE

(30) Priorität: 23.03.2016 DE 102016105488
(43) Veröffentlichungstag der Anmeldung: 27.09.2017
(73) Patentinhaber: CLAAS Selbstfahrende Erntemaschinen GmbH, 33428 Harsewinkel (DE)
(72) Erfinder: Quincke, Gunnar, 59494 Soest (DE)
(74) Vertreter: CLAAS Gruppe

(56) Entgegenhaltungen:
- EP-A2- 0 166 137
- DE-A1- 4 035 470
- US-A1- 2016 003 656

## Beschreibung

Die vorliegende Erfindung betrifft ein Verfahren zum Erfassen einer Kornzahl eines Erntegutstroms, insbesondere in einer selbstfahrenden Erntemaschine, bei dem ein Sensor einer Messvorrichtung Körner, die auf eine Fläche der Messvorrichtung aufprallen, mittels eines Messsignals erfasst und eine Verarbeitungseinheit der Messvorrichtung dazu eingerichtet ist, die Kornzahl anhand des Messsignals zu bestimmen. Die vorliegende Erfindung betrifft weiterhin eine Messvorrichtung zur Erfassung einer Kornzahl mit einem solchen Verfahren sowie eine selbstfahrende Erntemaschine mit einer solchen Messvorrichtung.

Zur Effizienzsteigerung bei der Ernte mittels Mähdreschern werden die Arbeitsorgane des Dreschwerks, der Trenneinheit oder der Reinigungseinheit heutzutage in zunehmenden Maße automatisch mittels Kennlinienfeldern und/oder Messsignalen gesteuert. Um die Prozessparameter präzise einzustellen und auch den Kornverlust zu ermitteln, ist eine genaue Bestimmung des Korndurchsatzes verschiedener maschineller Funktionseinheiten und Arbeitsorgane von großer Bedeutung. Die Bestimmung des Korndurchsatzes und des Kornverlustes kann dabei mittels Korndurchsatzsensoren in Form von Körperschall-, Lichtschranken- oder kapazitativen Sensoren erfolgen. Körperschallsensoren haben den Vorteil, kostengünstig und robust zu sein. Ihr Funktionsprinzip beruht auf der Erfassung der Aufprallenergie eines auf eine Prallfläche auftreffenden Korns. Dies führt zu mechanischen Schwingungen, welche mittels eines Schallwandlers/Piezoelements in ein elektrisches Messsignal umgewandelt werden. Das Messsignal wird im Stand der Technik auf verschiedene Weise ausgewertet, um eine Angabe über die auftreffende Kornmenge zu erhalten.

Die Druckschrift DE 10 2006 015 152 A1 offenbart ein Verfahren zur Kornmengenbestimmung, bei dem die unterhalb einer Amplitude eines Messsignals angeordnete Teilfläche als Maß für die Anzahl der auf einen Körperschallsensor aufgetroffenen Körner genutzt wird. Jedoch ist die Schwingungsamplitude von der Kornfeuchte und der Geschwindigkeit des Korns, und daher von der Temperatur und Feuchtigkeit der Umgebung sowie von Maschinenparametern, abhängig. Körner mit unterschiedlichen Schwingungsamplituden gehen bei diesem Verfahren daher mit unterschiedlicher Gewichtung in die Kornzahlbestimmung ein. Dies führt zu ungenauen Messergebnissen, die von den Umwelteinflüssen und den Maschinenparametern beeinträchtigt sind.

Die Druckschrift EP 0 166 137 A2 beschreibt ein Verfahren zum akustischen Zählen von Partikeln, bei dem eine Schwingungsamplitude eines an einem Körperschallsensor gemessenen Messsignals mit einer Amplitude eines charakteristischen Referenzsignals verglichen wird. Ist die Amplitude des gemessenen Schwingungssignals kleiner als die des Referenzsignals, wird ein Partikel gezählt. Ist die Amplitude größer, wird auf das Auftreffen eines folgenden Partikels geschlossen. Zum Einem ist dieses Verfahren aufgrund des erforderlichen Vergleiches des Messsignals mit dem Referenzsignal aufwändig. Zudem hat sich gezeigt, dass es nicht mehr den heutigen Anforderungen an die Genauigkeit entspricht

Die Druckschriften DE4035470A1 und US2016003656A1 offenbaren auch ein Verfahren zum akustischen Zählen von Partikeln.

Es ist deshalb Aufgabe der Erfindung, die beschriebenen Nachteile des Standes der Technik zu vermeiden und ein Verfahren und eine Vorrichtung zur Bestimmung einer Kornzahl, insbesondere eines Korndurchsatzes und/oder eines Kornverlustes, insbesondere in einer Erntemaschine, zu schaffen, welche weitgehend unabhängig von Umwelteinflüssen und/oder den Maschinenparametern sind, und mit denen die Kornzahl genauer bestimmbar ist. Eine weitere Aufgabe der Erfindung ist es, eine Erntemaschine mit einer solchen Vorrichtung zu schaffen.

Die Aufgabe wird mit einem Verfahren mit den Merkmalen des unabhängigen Anspruchs 1, mit der Verwendung des Verfahrens mit den Merkmalen des Anspruchs 7, mit einer Messvorrichtung mit den Merkmalen des Anspruchs 8 sowie mit einer Erntemaschine mit den Merkmalen des unabhängigen Anspruchs 9 gelöst. Vorteilhafte Ausführungsformen sind den abhängigen Ansprüchen entnehmbar.

Dafür wird ein Verfahren zum Erfassen einer Kornzahl eines Erntegutstromes vorgesehen, bei dem ein Sensor einer Messvorrichtung Körner, die auf eine Prallfläche des Sensors aufprallen, mittels eines Messsignals erfasst. Eine Verarbeitungseinheit der Messvorrichtung ist dabei dazu eingerichtet ist, die Kornzahl anhand des Messsignals zu bestimmen.

Das Verfahren zeichnet sich dadurch aus, dass Anstiegsflanken des Messsignals erfasst werden und ein Maß für die Kornzahl bilden.

Das Verfahren wird bevorzugt in einer selbstfahrenden Erntemaschine dazu genutzt, Korndurchsatz und/oder Kornverluste zu erfassen. Dabei wird zunächst davon ausgegangen, dass ein neues auf die Prallfläche aufprallendes Korn zu einer Änderung der Steigung des Messsignals führt. Zum einen ist für dieses Verfahren kein zeit- und rechenaufwendiger Vergleich des Messsignals mit Referenzsignalen erforderlich. Zum anderen geht die Schwingungsamplitude, das heißt der Betrag des Messsignals nicht in die Berechnungen ein. Das Verfahren ermöglicht daher eine von Umwelteinflüssen und Maschinenparametern unabhängige Bestimmung der Kornzahl. Es hat sich gezeigt, dass die Betrachtung der Anstiegsflanken eine im Vergleich zum Stand der Technik erheblich genauere Bestimmung der Kornzahl ermöglicht.

Das Messsignal wird dafür vorverarbeitet. Im Rahmen der Vorverarbeitung wird es bevorzugt geglättet und verstärkt. Zudem wird es bevorzugt gefiltert, um Signalrauschen zu entfernen. Dies erfolgt bevorzugt mittels Tiefpassfiltern und/oder Bandpassfiltern.

Weiterhin wird das vorverarbeitete Messsignal gleichgerichtet. Dadurch werden im Folgenden auch negative Signalanteile des vorverarbeiteten Messsignals berücksichtigt und in positive Signalanteile umgewandelt. Anschließend wird von dem gleichgerichteten Messsignal eine Hüllkurve gebildet. Prinzipiell kann eine Hüllkurve auch nur von den positiven Signalanteilen gebildet werden. Das Gleichrichten des vorverarbeiteten Messsignals führt jedoch zu einer genaueren, insbesondere ausgeprägteren, Hüllkurve.

Das Bilden der Hüllkurve erfolgt bevorzugt mit herkömmlichen elektronischen Bauteilen. Es kann auch mit Hilfe eines programmierten Prozessors oder programmierbaren elektrischen Bausteinen erfolgen.

Die Hüllkurve des Messsignals wird digitalisiert. Es ist aber ebenfalls möglich, das Messsignal vordem Gleichrichten oder das gleichgerichtete Messsignal zu digitalisieren. In besonders einfacher Weise wird das Messsignal oder die Hüllkurve mittels eines A/D-Wandlers digitalisiert.

Um die Anstiegsflanken zu erfassen, wird die Steigung der Hüllkurve erfasst. Dabei wird die Hüllkurve differenziert. Die Differenzierung führt zu einer Impulsfolge mit einer Vielzahl Impulsen, deren Betrag die Steigung der Hüllkurve zum Abtastzeitpunkt wiedergibt. Eine Differenzierung stellt ein besonders schnelles Verfahren dar.

Dadurch stellen sich die Anstiegsflanken als positive Impulse der differenzierten Hüllkurve dar. Nur positive Impulse der differenzierten Hüllkurve bilden ein Maß für die Kornzahl. Diese sind ohne aufwändige Vergleiche schnell erfassbar.

Das Messsignal, und daher auch die Hüllkurve, wird jedoch durch auftreffende Nichtkornbestandteile des Erntegutstroms, wie z.B. Halme und Spreu, Vibrationen, mehrfaches Auftreffen desselben Korns und/oder zeitgleiches Auftreffen mehrerer Körner auf die Prallfläche verfälscht. Dies führt zu einer fehlerhaften Kornzahlerfassung, die durch die Anwendung verschiedener Selektionskriterien kompensiert wird.

Um geringfügige Steigungen, die beispielsweise durch Vibration einer die Messvorrichtung umgebenden Maschine, insbesondere Erntemaschine, und/oder durch Halme und Spreu verursacht sind, nicht zu berücksichtigen, werden nur positive Impulse der differenzierten Hüllkurve, die oberhalb eines Mindestschwellwertes angeordnet sind, als Korn gezählt.

Indem nur positive Impulse des differenzierten Messsignals, die oberhalb des Mindestschwellwertes angeordnet sind, berücksichtigt werden, werden Signale von Nicht-Kornbestandteilen des Erntegutstroms herausgefiltert und das Rauschen reduziert. In einfacher Weise lässt sich der Mindestschwellwert mittels einer Rauschsperre, insbesondere in Form eines Komparators, umsetzen.

Für einen aktuellen positiven Impuls der differenzierten Hüllkurve, der oberhalb des Mindestschwellwertes angeordnet ist, wird eine zeitabhängige und/oder amplitudenabhängige Grenzfunktion ermittelt. Mit der Grenzfunktion wird eine Mehrfachbestimmung desselben Korns, die beispielsweise auf ein oder mehrfaches wiederholtes Aufprallen desselben Korns zurückzuführen ist, verhindert. Bevorzugt ist die Grenzfunktion eine stetig fallende Funktion. Besonders bevorzugt ist sie eine linear fallende Funktion. Die Grenzfunktion kann aber auch eine nichtlinear fallende Grenzfunktion sein.

Um positive Impulse, die innerhalb einer Referenzzahl erfasster Abtastwerte liegen, richtig zu erfassen, werden bevorzugt Impulse der differenzierten Hüllkurve, welche innerhalb einer Referenzanzahl von Abtastwerten liegen, den Mindestschwellwert überschreiten und kleiner als ein Grenzfunktionswert der Grenzfunktion sind, zu einem Summenwert addiert. Vorzugsweise werden sie als Korn gezählt, wenn der Summenwert größer als der Grenzfunktionswert ist. Der Summenwert wird anschließend wie ein positiver Impuls behandelt. Durch das Aufsummieren wird der Betrag dieses positiven Impulses annährend richtig erfasst.

Es ist besonders bevorzugt, dass nur ein auf den aktuellen positiven Impuls folgender Impuls der differenzierten Hüllkurve als Korn gezählt wird, dessen Betrag größer als der Grenzfunktionswert der Grenzfunktion zum Zeitpunkt des folgenden Impulses ist. Die Grenzfunktion fungiert als ein dynamischer zusätzlicher Mindestschwellwert.

Weiterhin bevorzugt wird ein auf den aktuellen positiven Impuls folgender Impuls der differenzierten Hüllkurve, dessen Betrag größer als die Betrag des aktuellen positiven Impulses ist, nur als nächstfolgender aktueller positiver Impuls gezählt, wenn ein Mindestzeitabstand zwischen den beiden Impulsen vergangen ist. Die vorteilhafte Wirkung ist, dass ein mehrfaches Auftreffen desselben Korns keine fälschliche Mehrfachbestimmung zur Folge hat.

Schließlich bildet bevorzugt jeder als Korn gezählte positive Impuls der differenzierten Hüllkurve den aktuellen positiven Impuls, für den die Grenzfunktion neu berechnet wird. Jeder positive Impuls hat somit einen zeitlich beschränkten Einfluss auf die Identifizierung folgender Impulse. Dabei ist jeder aktuelle positive Impuls ein Startpunkt für eine eigene Grenzfunktion.

Da mit steigendem Signalpegel eine mittlere Impulsdauer steigt, ist es weiterhin bevorzugt, dass die Kornzahl mit einem Korrekturfaktor gewichtet wird. Mit der Gewichtung kann eine Anpassung der Kornzahl an den Signalpegel erfolgen. Dadurch kann eine fruchtartabhängige und/oder fallhöhenabhängige Korrektur der erfassten Kornzahl vorgenommen werden.

Alternativ lässt sich das Verfahren auch anwenden, indem die positiven Signalanteile des Messsignals beim Gleichrichten in negative Signalanteile umgewandelt werden. zusätzlich oder alternativ kann das Verfahren auch so angepasst werden, dass anstelle der Anstiegsflanken die Abstiegsflanken und/oder anstelle der positiven Impulse negative Impulse verwendet werden.

Die Kornzahl wird daher durch Aufsummieren der Anzahl markanter positiver Impulse der Impulsfolge erfasst. Gegebenenfalls erfolgt eine den Signalpegel berücksichtigende Korrektur. Es hat sich gezeigt, dass die Kornzahl so sehr genau erfassbar ist. Die Erfassung der Kornzahl in einer selbstfahrenden Erntemaschine, bevorzugt einem Mähdrescher, ermöglicht eine Optimierung der Einstellung der Arbeitsorgane der Erntemaschine, wodurch eine Erhöhung des Erntegutdurchsatzes, eine Verringerung des Kornbruchanteils und/oder eine Verringerung der Kornverluste erzielt werden können.

Die Aufgabe wird weiterhin gelöst mit einer Verwendung dieses Verfahrens zur Erfassung von Korndurchsatz und/oder Kornverlusten. In Erntemaschinen, insbesondere in selbstfahrenden Erntemaschinen, können die als Korndurchsatz erfasste Kornzahl und/oder die als Kornverlust erfasste Kornzahl zur Steuerung der Arbeitsorgane der Erntemaschine genutzt werden.

Die Aufgabe wird weiterhin gelöst mit einer Messvorrichtung zur Erfassung einer Kornzahl mit einem solchen Verfahren. Die Messvorrichtung weist den Sensor sowie eine Verarbeitungseinheit auf. Der Sensor ist bevorzugt ein elektroakustischen Sensor, besonders bevorzugt ein Körperschallsensor. Bei dieser Ausführungsform weist er eine Prallfläche auf, wobei eine durch Auftreffen eines Korns verursachte Schwingung der Prallfläche als Messsignal erfasst wird. Die Verarbeitungseinheit ist zur Bestimmung der Kornzahl anhand des erfassten Messsignals des Sensors vorgesehen. Dafür ist es bevorzugt, dass sie eine elektronische Schaltung, einen programmierten Baustein und/oder einen Prozessor umfasst.

Die Aufgabe wird weiterhin gelöst mit einer selbstfahrenden Erntemaschine mit einer solchen Messvorrichtung. Die Messvorrichtung ist bevorzugt in Strömungsrichtung eines Erntegutstromes an einem rückwärtigen Ende der Erntemaschine angeordnet. Vorzugsweise ist die Messvorrichtung, oder zumindest der Sensor der Messvorrichtung, an einem rückwärtigen Ende einer Reinigungseinheit vorgesehen.

Die Erntemaschine weist eine Steuer- und Regeleinrichtung auf, die dazu eingerichtet ist, die Arbeitsorgane zur Verarbeitung des Erntegutstromes in Abhängigkeit von der erfassten Kornzahl zu steuern. Es ist besonders bevorzugt, dass die Steuer- und Regeleinrichtung in der Verarbeitungseinheit der Messvorrichtung für die Bestimmung der Kornzahl genutzt wird.

Im Folgenden wird die Erfindung anhand von Figuren beschrieben. Die Figuren sind lediglich beispielhaft und schränken den allgemeinen Erfindungsgedanken nicht ein. Es zeigen
- Figur 1: Eine selbstfahrende Erntemaschine mit einer Messvorrichtung zur Erfassung einer Kornzahl;
- Figur 2: Schematisch eine Messvorrichtung zur Erfassung der Kornzahl; und
- Figur 3: In (a) ein vorverarbeitetes Messsignal, in (b) ein digitalisiertes differenziertes Messsignal und in (c) eine Selektion der als Korn gewerteten positiven Impulse.

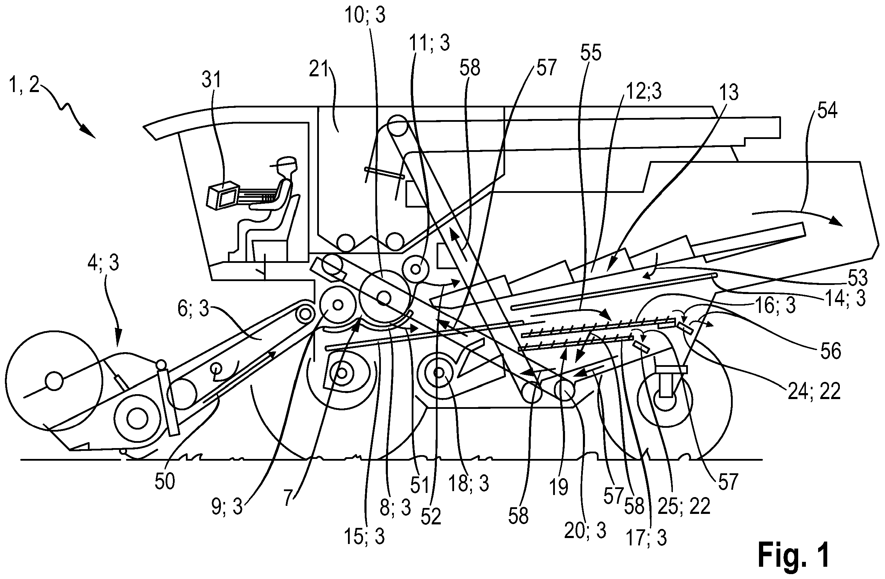

Figur 1 zeigt schematisch eine als Mähdrescher 1 ausgeführte selbstfahrende Erntemaschine 2. Der Mähdrescher 1 weist eine Vielzahl von Arbeitsorganen 3 zur Förderung und/oder Verarbeitung des Erntegutes (nicht dargestellt) auf.

Das Erntegut wird mittels eines Vorsatzgerätes 4 aufgenommen, und in einem zugeführten Erntegutstrom 50 mittels eines Schrägförderers 6 zum Dreschwerk 7 geführt. Das Dreschwerk 7 umfasst einen Dreschkorb 8, eine Beschleunigungstrommel 9, eine Dreschtrommel 10 und eine Umlenktrommel 11. Am Dreschkorb 8 erfolgt eine erste Abscheidung von freibeweglichen Körnern (nicht dargestellt) in Form eines ersten Erntegutstroms 51.

Nach Durchlaufen des Dreschwerks 7 wird ein aus diesem austretender zweiter Erntegutstrom 52, der Halmteile und noch nicht ausgedroschene Körner enthält, einer als Hordenschüttler 12 ausgeführten Trenneinheit 13 zugeführt. Die im zweiten Erntegutstrom 52 noch enthaltenen freibeweglichen Körner werden mittels des Hordenschüttler 12 in Form eines dritten Erntegutstroms 53 auf einen Rücklaufboden 14 und einen Vorbereitungsboden 15 abgeschieden. Der restliche vierte Erntegutstrom 54, vornehmlich bestehend aus Halmteilen, wird aus der Erntemaschine 2 herausgefördert.

Die Erfindung bezieht sich nicht nur auf Mähdrescher 1 mit einer als Hordenschüttler 12 ausgebildeten Trenneinheit 13. Sondern es liegt im Rahmen der Erfindung, dass es sich auch um einen Mähdrescher 1 mit Axialabscheider oder anderen Trenneinheiten 13 handeln kann.

Sowohl der aus dem Dreschkorb 8 als auch der aus dem Hordenschüttler 12 austretende, Körner enthaltende erste und dritte Erntegutstrom 51, 53 werden über den Rücklaufboden 14 und den Vorbereitungsboden 15 zu einem fünften Erntegutstrom 55 zusammengeführt und einer aus mehreren Siebebenen 16,17 und einem Gebläse 18 bestehenden Reinigungseinheit 19 zugeführt. Die Körner des fünften Erntegutstroms 55 werden hier gereinigt und Nicht-Kornbestandteile, wie beispielsweise Spreu- und Halmteile, in Form eines sechsten Erntegutstroms 56 abgetrennt und aus der Erntemaschine 2 herausgefördert.

Der dargestellte Mähdrescher 1 weist zudem einen Überkehrschnecke 20 auf, über den ein nicht vollständig ausgedroschener siebter Erntegutstrom 57 dem Dreschwerk 7 erneut zugeführt werden kann.

Ein gereinigter, aus Körnern bestehender achter Erntegutstrom 58 wird einem Korntank 21 zugeführt.

Der dargestellte Mähdrescher 1 weist an einem in Strömungsrichtung hinteren Ende der Reinigungseinheit 19, insbesondere der Siebebenen 16,17 der Reinigungseinheit 19, Messvorrichtungen 22 auf. Die Messvorrichtungen 22 umfassen jeweils Sensoren 23, die hier als Körperschallsensoren 24,25 ausgeführt sind. Die Körperschallsensoren 24,25 sind zur Erfassung einer Kornzahl 26 vorgesehen. Aufgrund der Positionierung der Messvorrichtung 22 am rückwertigen Ende der Reinigungseinheit 19 wird mit den Sensoren 23 hier zum einen ein Kornverlust des Mähdreschers 1, und zum anderen ein Kornanteil im dem, dem Dreschwerk 7 erneut zuführbaren siebten Erntegutstrom 57, erfasst.

Der Aufbau und die Funktionsweise solcher Körperschallsensoren 24,25 sind aus dem Stand der Technik hinlänglich bekannt. Sie umfassen eine Prallfläche, die durch auftreffende Partikel in eine Schwingung versetzt wird. Die Prallfläche der Körperschallsensoren 24,25 kann sowohl aus einer oder mehreren planaren, stabförmigen oder andersartigen Flächen aufgebaut sein. An die Prallfläche ist ein Schallwandler gekoppelt, der die Schwingung in Form eines elektrischen Messsignals 27 erfasst.

Es liegt im Rahmen der Erfindung, Körperschallsensoren 24,25 auch an anderen Erntegutströmen 50-58 in/an der Erntemaschine 2 zu platzieren, beispielsweise am rückwertigen Ende der Trenneinheit 13 zur Kornverlustmessung. Die gezeigten Erntegutströme 50-58 sind nicht abschließend zu verstehen und hängen von der technischen Konfiguration der Erntemaschine 2 ab.

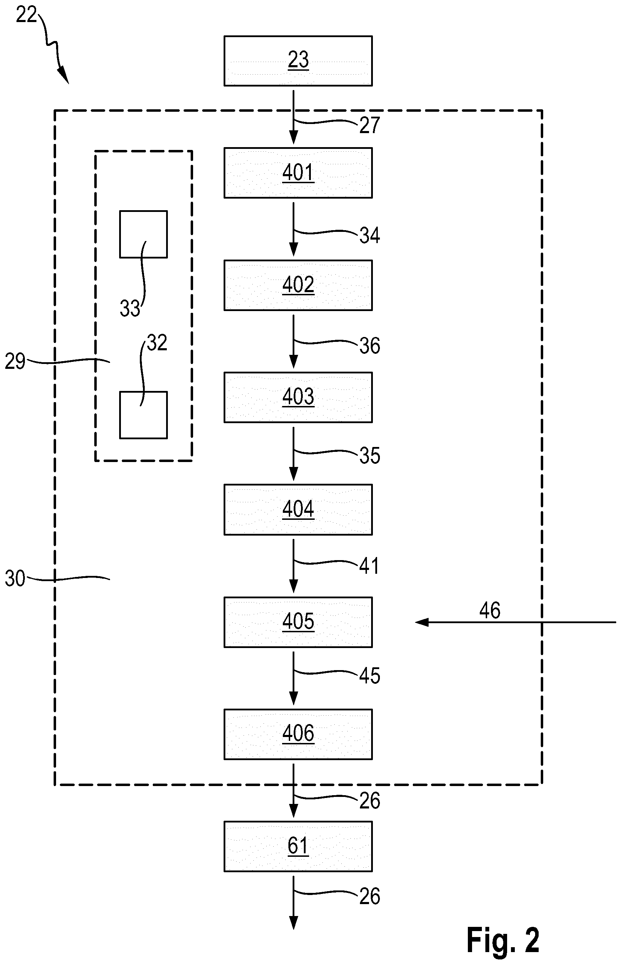

Ein Verfahren zur Bestimmung der Kornzahl 26 der auf die Prallfläche aufgetroffenen Körner anhand des Messsignals 27 ist im Rahmen der Fig. 2 schematisch beschrieben.

Figur 2 zeigt schematisch die Messvorrichtung 22 zur Erfassung der Kornzahl 26. Die Messvorrichtung 22 umfasst den Sensor 23 und, eine Verarbeitungseinheit 30, die dazu eingerichtet ist, die Kornzahl 26 anhand des Messsignals 27 zu bestimmen.

Dafür nutzt die Verarbeitungseinheit 30 eine Steuer- und Regeleinrichtung 29 der Messvorrichtung 22 (s. Figur 2), die einen Prozessor 32, elektronische Schaltungen 33 und/oder andere, insbesondere programmierbarer, elektrische Bauelemente umfasst. Die Steuer- und Regeleinrichtung 29 ist hier als separate Steuer- und Regeleinrichtung 29 der Messvorrichtung 22 vorgesehen. Es kann aber auch die Steuer- und Regeleinrichtung 31 der Erntemaschine 2 dafür genutzt werden. Prinzipiell können anstelle einer Steuer- und Regeleinrichtung 29,31 elektronische Schaltungen (hier nicht gezeigt) und/oder, insbesondere programmierbare, elektronische Bauelemente vorgesehen sein.

Die Verarbeitungseinheit 30 weist zur Verarbeitung des Messsignals 27 Mittel zur Vorverarbeitung 401 des Messsignals 27 auf. Dabei wird das Messsignal 27 mittels einem herkömmlichen Verstärker (nicht dargestellt) verstärkt, mittels herkömmlichen Filtern (nicht dargestellt) geglättet und/oder von Rauschen befreit.

Die Verarbeitungseinheit 30 weist zudem einen Gleichrichter (nicht dargestellt), beispielsweise einen Komparator, zum Gleichrichten des vorverarbeiteten Messsignals 34 auf. Das gleichgerichtete Messsignal (nicht bezeichnet) wird mit einem A/D- Wandler (Analog- Digital- Wandler) (nicht dargestellt) anschließend digitalisiert. Die Gelichrichtung und Digitalisierung sind hier mit dem Bezugszeichen 402 bezeichnet.

Weiterhin umfasst die Verarbeitungseinheit 30 Mittel zum Bilden der Hüllkurve 35 des vorverarbeiteten, gleichgerichteten, digitalisierten Messsignals 36. Vorzugsweise sind die Mittel zum Bilden der Hüllkurve 35 aus elektronischen Bauteilen (nicht dargestellt) gebildet. Prinzipiell ist aber auch eine programmbasierte Verarbeitung mittels programmierten Bausteinen (nicht dargestellt) oder des Prozessor 32 zur Bildung der Hüllkurve 35 möglich.

Um die Kornzahl 26 zu bestimmen, werden hier die Anstiegsflanken 37 der Hüllkurve 35 erfasst. Deren Anzahl bildet ein Maß für die Kornzahl 26. Dafür wird zunächst die Steigung der Hüllkurve 35 erfasst. Die Verarbeitungseinheit 30 weist dafür Mittel zum Differenzieren 404 der Hüllkurve 35 auf. Das Differenzieren 404 der Hüllkurve 35 führt zu einer Impulsfolge 41, die eine Vielzahl Impulse 42 aufweist. Der Betrag eines Impulses 49 stellt jeweils die Steigung der Hüllkurve 35 zum Abtastzeitpunkt 43 dar. Die Anstiegsflanken 37 sind dabei durch positive Impulse 44 gebildet.

Um Vibrationen der Erntemaschine 2 und/oder Signalanteile einer differenzierten Hüllkurve 41, die durch Halme und/oder Spreu verursacht sind, nicht zu berücksichtigen, weist die Verarbeitungseinheit 30 zudem Mittel zur Selektion relevanter positiver Impulse 44 und/oder Mittel zur Gewichtung der vorläufigen Kornzahl 45 auf. Die Mittel können ebenfalls aus elektronischen Bauteilen (nicht dargestellt) gebildet, oder programmbasiert realisiert sein.

Zur Voreinstellung der Verarbeitungseinheit 30 umfasst diese eine Benutzerschnittstelle (nicht dargestellt) und/oder einen Speicher (nicht dargestellt) zum Eingeben und/oder Speichern verarbeitungsrelevanter Selektionskriterien und/oder Kalibrationswerte 46, die insbesondere zur Bestimmung der vorläufigen Kornzahl 45 relevant sind. Dadurch werden vor allem Selektionskriterien zur Auswahl der als Körner gezählten positiven Impulse 44, wie beispielsweise ein Mindestschwellwert 47, ein Mindestzeitabstand 48, und/oder eine Steigung einer Grenzfunktion 60, angepasst.

Schließlich weist die Verarbeitungseinheit 30 Mittel zur Gewichtung der vorläufigen Kornzahl 45 auf. Die Mittel können ebenfalls aus elektronischen Bauteilen (nicht dargestellt) gebildet, oder programmbasiert realisiert sein. Bei der Gewichtung wird mittels eines Korrekturfaktors aus der vorläufigen Kornzahl 45 die Kornzahl 26 generiert.

Zudem weist die Verarbeitungseinheit 30 eine Kommunikationsschnittstelle 61 auf. Über die Kommunikationsschnittstelle 61 ist die Verarbeitungseinheit 30 mit einer Steuer- und Regeleinrichtung 31 der Erntemaschine 2 verbunden. Dadurch wird eine Regelung des Ernteprozess, insbesondere der Arbeitsorgan 3 der Erntemaschine 2, anhand der erfassten Kornzahl 26 ermöglicht. In der vorliegenden Ausführungsform wird die Kornzahl 26 mit einer als CAN-Bus (control area network) ausgebildeten Kommunikationsschnittstelle 61 an die Steuer- und Regeleinrichtung 31 der Erntemaschine 2 übersendet. Die Datenübertragung kann im Allgemeinen sowohl drahtgebunden als auch drahtlos erfolgen. Alternativ oder zusätzlich können andere Kommunikationsschnittstellen 61 vorgesehen sein, welche zur Datenübertragung geeignet sind, so zum Beispiel ISO-Bus, LIN-Bus (local interconnect network), PWM (Pulsweitenmodulierte Kommunikationsschnittstelle), Bluetooth, Funk, IR (Infrarot), Ethernet und weitere.

Die Steuer- und Regeleinrichtung 31 der Erntemaschine 2 berechnet aus der Kornzahl 26 den Korndurchsatz der betreffenden Arbeitsorgan 3 sowie Kornverluste und steuert die Arbeitsorgan 3 und/oder die Vorfahrtsgeschwindigkeit des Mähdreschers 1, insbesondere automatisch. Dabei wird die Steuerung online, das heißt während des Erntevorgangs, an die Kornzahl 26, den Korndurchsatz und/oder die Kornverluste angepasst. Die Steuerung kann auf einer vordefinierten Erntestrategie, Parametereinstellungen und/oder Daten anderer Messvorrichtungen 22 basieren. Alternativ oder ergänzend können die Kornzahl 26, der Korndurchsatz und/oder die Kornverluste dem Bediener der Erntemaschine 2 angezeigt werden, so dass der Bediener die Steuerung anpassen kann und/oder die Arbeitsorgan 3 manuell steuern kann.

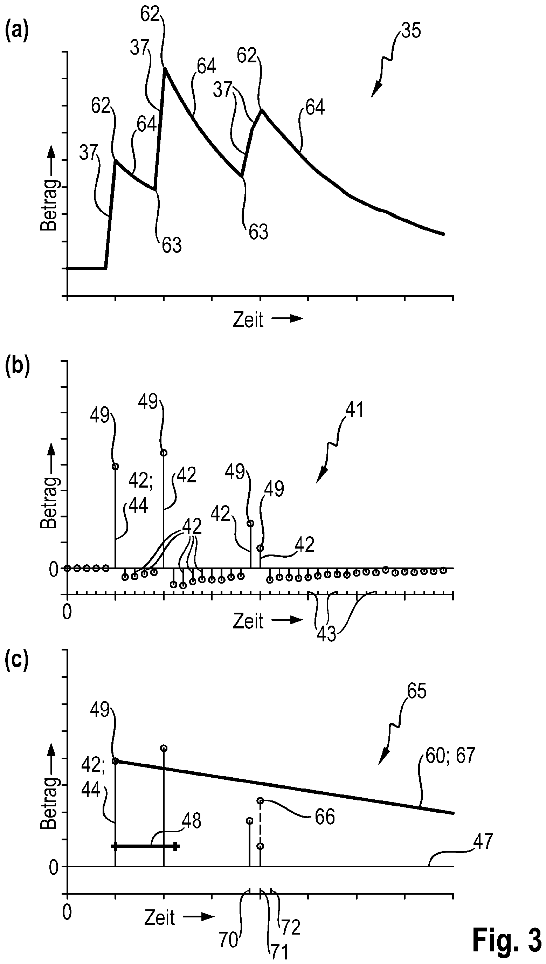

Details zur Verarbeitung des Messsignals 27 und zur Selektion der relevanten positiven Impulse 44 sind den Figuren 3(a) - 3(c) zu entnehmen.

Figur 3(a) zeigt eine Hüllkurve 35 eines vorverarbeiteten, gleichgerichteten Messsignals (nicht bezeichnet). Die Hüllkurve weist mehrere lokale Signalmaxima 62 und lokale Signalminima 63 sowie Wendepunkte auf. Zwischen den lokalen Signalmaxima 62 und den lokalen Signalminima 63 weist die Hüllkurve 35 Anstiegsflanken 37 und Abstiegsflanken 64 auf.

Um die Kornzahl 26 zu bestimmen, werden die Anstiegsflanken 37 erfasst. Dafür wird die Hüllkurve 35 digitalisiert und differenziert. Die differenzierte Hüllkurve 41 ist in der Fig. 3(b) gezeigt. Die Anstiegsflanken 37 der Hüllkurve 35 stellen sich bei der differenzierten Hüllkurve 41 als positive Impulse 44 dar. Der Betrag der Impulse 49 entspricht der Steigung der Hüllkurve 35 im Abtastzeitpunkt 43. Die differenzierte Hüllkurve 41 ist daher eine Impulsfolge 41 mit einer Vielzahl Impulsen 42. Im Folgenden wird die differenzierte Hüllkurve 41 auch als Impulsfolge 41 bezeichnet.

Das Verfahren geht davon aus, dass ein neues, auf die Prallfläche auftreffendes Korn zu einer großen Anstiegsflanke 37 führt. Es werden daher bei der Kornzahlbestimmung nach diesem Verfahren nur positive Impulse 44 erfasst.

Bei der Kornzahlbestimmung werden im Folgenden weitere Selektionskriterien berücksichtigt. Dabei werden zunächst Impulse 42, die einen Mindestschwellwert 47 unterschreiten, nicht erfasst. Dadurch werden Signalanteile von Nicht-Kornbestandteilen der Erntegutströme 56,57 sowie Rauschanteile herausgefiltert. Fig. 3(c) zeigt die gefilterte Impulsfolge 41.

Für einen aktuellen positiven Impuls 44 der gefilterten Impulsfolge 65, der oberhalb des Mindestschwellwertes 47 angeordnet ist, wird eine zeitabhängige und/oder amplitudenabhängige Grenzfunktion 60 ermittelt. Die Grenzfunktion 60 ist hier eine linear abfallende Funktion. Grundlage für die Ermittlung der Grenzfunktion 60 bilden empirisch ermittelte Initialisierungswerte.

Mit der Grenzfunktion 60 wird eine Mehrfachbestimmung desselben Korns, die auf ein wiederholtes Aufprallen des Korns zurückzuführen ist, verhindert.

Sofern zwischen den Abtastwerten 70-72 lokale Signalmaxima 62 angeordnet sind, kann der Betrag 49 des erfassten Impulses 42 unterhalb des Betrages 49 des tatsächlichen, der Anstiegsflanke zugeordneten, positiven Impulses 44 liegen. Daher werden Impulse 42 der gefilterten Impulsfolge 65, welche innerhalb einer Referenzanzahl von Abtastwerten 70-72 liegen, und die den Mindestschwellwert 47 überschreiten, zu einem Summenwert 66 addiert, wenn sie kleiner als ein Grenzfunktionswert der Grenzfunktion 60 zum Abtastzeitpunkt 43 sind. Dabei wird der Summenwert 66 dem letzten der aufsummierten Impulse 42 zugeordnet. Der Summenwert 66 wird wie ein positiver Impuls 44 behandelt. Er wird daher als Korn gezählt, wenn er größer als der Grenzfunktionswert ist.

Ein auf den aktuellen positiven Impuls 44 folgender Impuls 42 der gefilterten Impulsfolge 65 wird nur als Korn gezählt, wenn sein Betrag 49 größer als der Grenzfunktionswert der Grenzfunktion 60 zum Zeitpunkt des folgenden Impulses 42 ist. Die erfasste vorläufige Kornzahl 45 wird dann um ein Korn erhöht.

Zudem wird ein auf den aktuellen positiven Impuls 44 folgender Impuls 42 der gefilterten Impulsfolge 65, dessen Betrag 49 größer als der Betrag 49 des aktuellen positiven Impulses 44 ist, nur als nächstfolgendes aktueller positiver Impuls 44 gezählt, und zur erfassten vorläufigen Kornzahl 45 addiert, wenn ein Mindestzeitabstand 48 zwischen den beiden Impulsen 42 vergangen ist. Ein mehrfaches Auftreffen eines Korns hat daher keine Mehrfachbestimmung desselben Korns zur Folge.

Weiterhin bildet jeder als Korn gezählte positiver Impuls 44 der gefilterten Impulsfolge 65 den aktuellen positiven Impuls 44, für den die Grenzfunktion 60 neu berechnet wird. Ein solcher positiver Impuls 44 hat daher einen zeitlich beschränkten Einfluss auf die Identifizierung folgender positiver Impulse 44. Die Grenzfunktion 60 bildet hier daher einen dynamischen zusätzlichen Mindestschwellwert 67.

Die als Korn gezählten positiven Impulse 44 werden zur vorläufigen Kornzahl 45 aufsummiert. Anschließend wird eine fruchtartabhängige und/oder fallhöhenabhängige Korrektur des so bestimmten Wertes durch Gewichtung der vorläufigen Kornzahl 45 mittels eines Korrekturfaktors vorgenommen. Das Ergebnis ist die Kornzahl 26. Der für die Gewichtung genutzte Korrekturfaktor umfasst die Bestimmung der gemittelten Signalhöhe aller gezählter positiver Impulse 44. Alternativ oder zusätzlich ist eine weitere Gewichtung denkbar.

Die verarbeitungsrelevanten Selektionskriterien umfassen daher den Mindestschwellwertes 47, den Mindestzeitabstand 48, die Grenzfunktion 60 und/oder die Referenzanzahl der Abtastwerte 70-72.

Das Verfahren bestimmt die Kornzahl 26 durch Aufsummierung der Anzahl markanter Anstiegsflanken 64 des Messsignals 27, insbesondere der Hüllkurve 35 des vorverarbeiteten gleichgerichteten Messsignals 27.

Es ist mit hoher Geschwindigkeit kostengünstig realisierbar. Die Anzahl der erforderlichen Kalibrationen wird erheblich verringert. Das Verfahren ermöglicht eine sehr genaue Bestimmung der Kornzahl 26.

### Bezugszeichenliste:

- 1: Mähdrescher
- 2: Erntemaschine
- 3: Arbeitsorgan
- 4: Vorsatzgerät
- 50: Zugeführter Erntegutstrom
- 51: Erster Erntegutstrom
- 52: Zweiter Erntegutstrom
- 53: Dritter Erntegutstrom
- 54: Vierter Erntegutstrom
- 55: Fünfter Erntegutstrom
- 56: Sechster Erntegutstrom
- 57: Siebter Erntegutstrom
- 58: Achter Erntegutstrom
- 6: Schrägförderer
- 7: Dreschwerk
- 8: Dreschkorb
- 9: Beschleunigungstrommel
- 10: Dreschtrommel
- 11: Umlenktrommel
- 12: Hordenschüttler
- 13: Trenneinheit
- 14: Rücklaufboden
- 15: Vorbereitungsboden
- 16: Siebebene
- 17: Siebebene
- 18: Gebläse
- 19: Reinigungseinheit
- 20: Überkehrschnecke
- 21: Korntank
- 22: Messvorrichtung
- 23: Sensor
- 24: Körperschallsensor
- 25: Körperschallsensor
- 26: Kornzahl
- 27: Messsignal
- 29: Steuer- und Regeleinrichtung der Messvorrichtung
- 30: Verarbeitungseinheit
- 31: Steuer- und Regeleinrichtung der Erntemaschine
- 32: Prozessor
- 33: Elektronische Schaltung
- 34: Vorverarbeitetes Messsignal
- 35: Hüllkurve
- 36: Vorverarbeitetes gleichgerichtetes digitalisiertes Messsignal
- 37: Anstiegsflanke
- 401: Vorverarbeitung
- 402: Gleichrichtung und Digitalisierung
- 403: Bilden der Hüllkurve
- 404: Differenzieren
- 405: Selektion relevanter positiver Impulse
- 406: Gewichtung der vorläufigen Kornzahl
- 41: Impulsfolge; Differenzierte Hüllkurve
- 42: Impuls
- 43: Abtastzeitpunkt
- 44: Positiver Impuls
- 45: Vorläufige Kornzahl
- 46: Kalibrationswerte
- 47: Mindestschwellwert
- 48: Mindestzeitabstand
- 49: Betrag eines Impulses
- 60: Grenzfunktion
- 61: Kommunikationsschnittstelle
- 62: Lokales Signalmaximum
- 63: Lokales Signalminimum
- 64: Abstiegsflanke
- 65: Gefilterte Impulsfolge
- 66: Summenwert
- 67: Dynamischer Mindestschwellwert
- 70: Erster Abtastwert
- 71: Zweiter Abtastwert
- 72: Dritter Abtastwert

## Patentansprüche

1. Verfahren zum Erfassen einer Kornzahl (26) eines Erntegutstromes (50-58), insbesondere in einer selbstfahrenden Erntemaschine (2), bei dem ein Sensor (23) einer Messvorrichtung (22) Körner, die auf eine Prallfläche des Sensors (23) aufprallen, mittels eines Messsignals (27) erfasst und eine Verarbeitungseinheit (30) der Messvorrichtung (22) dazu eingerichtet ist, die Kornzahl (26) anhand des Messsignals (27) zu bestimmen, wobei
die Anstiegsflanken (37) des Messsignals (27) erfasst werden und ein Maß für die Kornzahl (26) bilden, wobei das Messsignal (27) vorverarbeitet wird, insbesondere gefiltert, geglättet, und/oder verstärkt wird, und wobei
das vorverarbeiteten Messsignal (34) gleichgerichtet, digitalisiert, und eine Hüllkurve (35) des vorverarbeiteten Messsignals (34) gebildet wird, wobei die Hüllkurve (35) differenziert wird und wobei positive Impulse (44) der differenzierten Hüllkurve (41) ein Maß für die Kornzahl (26) bilden, wobei
nur positive Impulse (44) der differenzierten Hüllkurve (41), die oberhalb eines Mindestschwellwertes (47) angeordnet sind, als Korn gezählt werden, **dadurch gekennzeichnet, dass**
für einen aktuellen positiven Impuls (44) der differenzierten Hüllkurve (41), der oberhalb des Mindestschwellwertes (47) angeordnet ist, eine zeitabhängige und amplitudenabhängige Grenzfunktion (60) zum Erfassen einer Kornzahl ermittelt wird.

2. Verfahren nach Anspruch 1,
**dadurch gekennzeichnet, dass**
Impulse (42) der differenzierten Hüllkurve (41), welche innerhalb einer Referenzanzahl von Abtastwerten (70-72) liegen, den Mindestschwellwert (47) überschreiten und kleiner als ein Grenzfunktionswert der Grenzfunktion (60) sind, zu einem Summenwert (66) addiert und als Korn gezählt werden, wenn der Summenwert (66) größer als der Grenzfunktionswert ist.

3. Verfahren nach einem der vorhergehenden Ansprüche,
**dadurch gekennzeichnet, dass**
nur ein auf den aktuellen positiven Impuls (44) folgender Impuls (42) der differenzierten Hüllkurve (41) als Korn gezählt wird, dessen Betrag (49) größer als der Grenzfunktionswert der Grenzfunktion (60) zum Zeitpunkt des folgenden Impulses (42) ist.

4. Verfahren nach einem der vorhergehenden Ansprüche,
**dadurch gekennzeichnet, dass**
ein auf den aktuellen positiven Impuls (44) folgender Impuls (42) der differenzierten Hüllkurve (41), dessen Betrag (49) größer als der Betrag (49) des aktuellen positiven Impulses (44) ist, nur als nächstfolgender aktueller positiver Impuls (4) gezählt wird, wenn ein Mindestzeitabstand (48) zwischen den beiden Impulsen (42) vergangen ist.

5. Verfahren nach einem der vorhergehenden Ansprüche,
**dadurch gekennzeichnet, dass**
jeder als Korn gezählte positive Impuls (44) der differenzierten Hüllkurve (41) den aktuellen positiven Impuls (44) bildet, für den die Grenzfunktion (60) neu berechnet wird.

6. Verfahren nach einem der vorhergehenden Ansprüche,
**dadurch gekennzeichnet, dass**
die Kornzahl (26) mit einem Korrekturfaktor gewichtet wird.

7. Verwendung des Verfahrens zur Erfassen einer Kornzahl (26) eines Erntegutstromes (50-58) nach einem der vorherigen Ansprüche, insbesondere in einer selbstfahrenden Erntemaschine (2), zur Erfassung von Korndurchsatz und/oder Kornverlusten.

8. Messvorrichtung (22) mit einem eine Prallfläche aufweisender Sensor (23) und einer Verarbeitungseinheit (30) zur Erfassung einer Kornzahl (26) mit einem Verfahren nach Anspruch 6.

9. Selbstfahrende Erntemaschine (2) mit einer Messvorrichtung (22) nach Anspruch 8.

10. Selbstfahrende Erntemaschine (2) nach Anspruch 9, **dadurch gekennzeichnet, dass** sie eine Steuer- und Regeleinrichtung (31) aufweist, die dazu eingerichtet ist, die Arbeitsorgane (3) zur Verarbeitung des Erntegutstromes (50-58) in Abhängigkeit von der erfassten Kornzahl (26) zu steuern.

## Claims

1. A method of detecting a grain count (26) of a crop material flow (50-58), in particular in a self-propelled harvester (2), in which a sensor (23) of a measuring device (22) detects grains which impact on an impact surface of the sensor (23) by means of a measurement signal (27) and a processing unit (30) of the measuring device (22) is adapted to determine the grain count (26) by means of the measurement signal (27), wherein
the rising edges (37) of the measurement signal (27) are detected and form a measure for the grain count (26), wherein
the measurement signal (27) is pre-processed, in particular filtered, smoothed and/or amplified, and wherein
the pre-processed measurement signal (34) is rectified, digitised and an envelope curve (35) of the pre-processed measurement signal (34) is formed, wherein the envelope curve (35) is differentiated and wherein
positive pulses (44) of the differentiated envelope curve (41) form a measure for the grain count (26), wherein
only positive pulses (44) of the differentiated envelope curve (41) which are arranged above a minimum threshold value (47) are counted as grain,
**characterised in that** for a current positive pulse (44) of the differentiated envelope curve (41), that is above the minimum threshold value (47), a time-dependent and amplitude-dependent limit function (60) is ascertained for detecting a grain count.

2. A method according to claim 1
**characterised in that**
pulses (42) of the differentiated envelope curve (41), that are within a reference number of sample values (70-72) exceed the minimum threshold value (47) and are smaller than a limit function value of the limit function (60), are added to a sum value (66) and are counted as grain if the sum value (66) is greater than the limit function value.

3. A method according to one of the preceding claims
**characterised in that**
only a pulse (42) of the differentiated envelope curve (41), that follows the current positive pulse (44), is counted as grain, the magnitude (49) of which is greater than the limit function value of the limit function (60) at the time of the following pulse (42).

4. A method according to one of the preceding claims
**characterised in that**
a pulse (42) of the differentiated envelope curve (41), that follows the current positive pulse (44), the magnitude (49) of which is greater than the magnitude (49) of the current positive pulse (44), is only counted as the next following current positive pulse (4) if the minimum time period (48) between the two pulses (42) has elapsed.

5. A method according to one of the preceding claims
**characterised in that**
each positive pulse (44) of the differentiated envelope curve (41), that is counted as grain, forms the current positive pulse (44), for which the limit function (60) is freshly calculated.

6. A method according to one of the preceding claims
**characterised in that**
the grain count (26) is weighted with a correction factor.

7. Use of the method of detecting a grain count (26) of a crop material flow (50-58) according to one of the preceding claims, in particular in a self-propelled harvester (2), for detecting grain throughput and/or grain losses.

8. A measuring device (22) comprising a sensor (23) having an impact surface and a processing unit (30) for detecting a grain count (26) with a method according to claim 6.

9. A self-propelled harvester (2) comprising a measuring device (22) according to claim 8.

10. A self-propelled harvester (2) according to claim 9 **characterised in that** it has an open-loop and closed-loop control device (31) adapted to control the working members (3) for processing the crop material flow (50-58) in dependence on the detected grain count (26).

## Revendications

1. Procédé de détection d'un nombre de grains (26) d'un flux de produit récolté (50-58), en particulier dans une machine de récolte automotrice (2), dans lequel un capteur (23) d'un dispositif de mesure (22) détecte, au moyen d'un signal de mesure (27), des grains qui rebondissent sur une surface de rebond du capteur (23), et une unité de traitement (30) du dispositif de mesure (22) est agencée pour déterminer le nombre de grains (26) à l'aide du signal de mesure (27), les flancs ascendants (37) du signal de mesure (27) étant détectés et formant une mesure pour le nombre de grains (26), le signal de mesure (27) étant prétraité, en particulier filtré, lissé et/ou amplifié, et le signal de mesure prétraité (34) étant redressé, numérisé, et une enveloppante (35) du signal de mesure prétraité (34) étant formée, l'enveloppante (35) étant différenciée, et des impulsions positives (44) de l'enveloppante différenciée (41) formant une mesure pour le nombre de grains (26), seules des impulsions positives (44) de l'enveloppante différenciée (41) qui sont situées au-dessus d'une valeur de seuil minimale (47) étant comptées comme grain, **caractérisé en ce que** pour une impulsion positive instantanée (44) de l'enveloppante différenciée (41) qui est située au-dessus de la valeur de seuil minimale (47), une fonction frontière (60) dépendant du temps et dépendant de l'amplitude est déterminée pour détecter un nombre de grains.

2. Procédé selon la revendication 1, **caractérisé en ce que** des impulsions (42) de l'enveloppante différenciée (41), qui sont situées à l'intérieur d'un nombre de référence de valeurs de palpage (70-72), qui excèdent la valeur de seuil minimale (47) et qui sont inférieures à une valeur de fonction frontière de la fonction frontière (60), sont additionnées pour obtenir une valeur cumulée (66) et comptées comme grain si la valeur cumulée (66) est supérieure à la valeur de fonction frontière.

3. Procédé selon une des revendications précédentes, **caractérisé en ce que** seule une impulsion (42) de l'enveloppante différenciée (41) suivant l'impulsion positive instantanée (44) est comptée comme grain, sa valeur (49) étant supérieure à la valeur de fonction frontière de la fonction frontière (60) au moment de l'impulsion suivante (42) .

4. Procédé selon une des revendications précédentes, **caractérisé en ce qu'**une impulsion (42) de l'enveloppante différenciée (41) qui suit l'impulsion positive instantanée (44) et dont la valeur (49) est supérieure à la valeur (49) de l'impulsion positive instantanée (44) n'est comptée comme impulsion positive instantanée immédiatement suivante (4) que si un intervalle de temps minimal (48) s'est écoulé entre les deux impulsions (42).

5. Procédé selon une des revendications précédentes, **caractérisé en ce que** chaque impulsion positive (44) de l'enveloppante différenciée (41) comptée comme grain forme l'impulsion positive instantanée (44) pour laquelle la fonction frontière (60) est recalculée.

6. Procédé selon une des revendications précédentes, **caractérisé en ce que** le nombre de grains (26) est pondéré avec un facteur de correction.

7. Utilisation du procédé de détection d'un nombre de grains (26) d'un flux de produit récolté (50-58) selon une des revendications précédentes, en particulier dans une machine de récolte automotrice (2), pour détecter un débit de grain et/ou des pertes de grain.

8. Dispositif de mesure (22) comprenant un capteur (23), lequel comporte une surface de rebond (23), et comprenant une unité de traitement (30) pour détecter un nombre de grains (26) avec un procédé selon la revendication 6.

9. Machine de récolte automotrice (2) comprenant un dispositif de mesure (22) selon la revendication 8.

10. Machine de récolte automotrice (2) selon la revendication 9, **caractérisée en ce qu'**elle comporte un équipement de commande et de régulation (31) qui est agencé pour commander les organes de travail (3) aptes à traiter le flux de produit récolté (50-58) en fonction du nombre de grains détecté (26).
